# EUROPÄISCHE PATENTANMELDUNG

(11) **EP 2 001 268 A2**
(43) Veröffentlichungstag der Anmeldung: **10.12.2008**
(21) Anmeldenummer: 08002765.9
(22) Anmeldetag: 09.05.2006
(51) Int. Cl.: H05B 6/46, A23L 3/005

(54) **Verfahren zur gleichmäßigen Erhitzung von Produkten in Verpackungen**

(30) Priorität: 23.05.2005 DE 102005024152
(62) Teilanmeldung aus: 06722849.4
(71) Anmelder: Fraunhofer-Gesellschaft zur Förderung der angewandten Forschung e.V., 80686 München (DE)
(72) Erfinder: Eisner, Peter, 85354 Freising (DE); Pfeiffer, Thomas, 80799 München (DE)
(74) Vertreter: Gagel, Roland

(57) **Zusammenfassung**

Die vorliegende Erfindung betrifft ein Verfahren zur gleichmäßigen Erhitzung von Produkten, bei dem die Produkte in einem HF-Feld erhitzt werden, durch das sich erste Bereiche der Produkte stärker erwärmen als zweite Bereiche. Bei dem Verfahren werden die ersten Bereiche zumindest vor oder während der Erhitzung in dem Wechselfeld durch zusätzliche Mittel und/oder Maßnahmen zur Wärmeübertragung gekühlt und/oder die zweiten Bereiche durch zusätzliche Mittel und/oder Maßnahmen zur Wärmeübertragung erwärmt. Das Verfahren zeichnet sich dadurch aus, dass die Produkte in einer geschlossenen Verpackung oder einem geschlossenen Gefäß vollständig in ein flüssiges Medium als das zusätzliche Mittel zur Wärmeübertragung eingebracht und von diesem umströmt werden.

Mit dem vorliegenden Verfahren wird eine Vergleichmäßigung des Temperaturprofils in Lebensmittel-, Pharma- und/oder Kosmetikprodukten bei der Erhitzung in einem hochfrequenten elektromagnetischen Wechselfeld erreicht.

## Beschreibung

### Technisches Anwendungsgebiet

Die Erfindung betrifft ein Verfahren zur gleichmäßigen Erhitzung von Produkten, insbesondere zur Vergleichmäßigung des Temperaturprofils in Lebensmittel-, Pharma- und/oder Kosmetikprodukten bei der Erhitzung in einem hochfrequenten elektromagnetischen Wechselfeld.

Erhitzungsverfahren werden u.a. benötigt, um Lebensmittel oder Pharmaprodukte zu entkeimen und damit haltbar zu machen. Beispiele sind die Pasteurisierung oder Sterilisierung von Lebensmitteln wie z.B. Konserven in Gläsern oder Dosen.

### Stand der Technik

Bekannt sind Verfahren zur Erhitzung von Produkten mittels Wärmetauscher oder Dampfautoklaven. So wird z.B. Milch bei der Pasteurisierung in Plattenwärmetauschern erhitzt, eine definierte Zeit auf Pasteurisierungstemperatur gehalten und anschließend wieder abgekühlt. Dieses Verfahren ist für flüssige Lebensmittel etabliert und seit Langem bewährt.

Konservendosen oder -gläser mit Gemüse, Früchten, Fertiggerichten, Eintöpfen oder mit ähnlichen Inhalten werden fast ausschließlich in Autoklaven erhitzt und damit haltbar gemacht. In den Autoklaven wird heißer Dampf bei Temperaturen von über 120 °C eingeleitet. Der Dampf überträgt die Energie durch Kondensation an die Außenseite der Dosen. Von dort findet eine Erwärmung fast ausschließlich über Wärmeleitung statt, so dass die Produkte erst nach 30 bis 60 Minuten die gewünschte Endtemperatur in der Mitte der Konserve erreicht haben.

Vergleichbares gilt für die Erhitzung von stückigen Gütern in flüssigen Matrices, wie zum Beispiel von Fleischstückchen in Soßen oder von Früchten in Fruchtzubereitungen oder Konfitüren. Diese Suspensionen müssen sehr lange erhitzt werden, da im Innern der Feststoff-Stücke auch die gewünschte Temperatur erreicht werden muss und die Wärme durch Wärmeleitung übertragen wird. Dies führt dazu, dass das Produkt sehr lange erhitzt werden muss und damit massive Verschlechterungen des Geschmacks, des Vitamingehalts sowie der Konsistenz und Farbe der Produkte auftreten. Konservierte Lebensmittel in Dosen haben aus diesem Grund nur eine minderwertige Verzehrqualität und weisen ausgeprägte Veränderungen im Vergleich zum frischen Ausgangsprodukt z.B. der Früchte auf.

Produkte, die zum Zwecke der Pasteurisierung, Sterilisierung oder aus anderen Gründen erwärmt werden müssen, sind unter anderem:
- Feststoffe und stückige Güter in einer umgebenden flüssigen Phase (z.B. Fisch oder Fleisch in Soßen, Früchte in Wasser oder Säften, Marmelade mit Fruchtstücken, Fruchtzubereitungen für Milchprodukte, Flüssigkeiten mit Proteinstücken usw.),
- Verpackte Lebensmittel, Pharmaprodukte und Kosmetika als Flüssigkeit, Feststoff oder Suspension in Verpackungen wie Blistern, Folien, Schläuchen, Wursthäuten, Därmen, polymeren Verpackungen und anderen,
- Viskose oder pastöse und/oder Feststoff-haltige Flüssigkeiten und Pasten, Soßen, Cremes, Schäume und andere mehrphasige Systeme, die aufgrund der heterogenen Zusammensetzung und/oder Feststoff- und/oder Gasgehalte in konventionellen Plattenwärmetauschern oder Rohrwärmetauschern nicht oder nur sehr inhomogen erwärmt werden können,
- Stoffe, die an den überhitzten Wärmetauscherflächen zu Verkrustungen, Belägen, Temperaturschädigung und dergleichen führen, sowie
- Stoffe, die sehr temperaturempfindlich sind, wie z.B. Pharmaprodukte, Infusionslösungen, medizinische Flüssignahrung oder andere Stoffe, die besonders gleichmäßig und schonend erwärmt werden müssen.

In der vorliegenden Patentanmeldung werden die genannten Stoffe und Stoffgemische als Produkte bezeichnet.

Ein Lösungsansatz zur Verkürzung der Aufheizzeit und damit zur Verbesserung der Qualität der Produkte stellt die schnelle, durchdringende Erhitzung mit elektromagnetischen Wechselfeldern dar. Neben der Mikrowellenerwärmung, deren geringe Eindringtiefe von 5 bis 20 mm für eine gleichmäßige Erhitzung der genannten Produkte nicht ausreichend ist, bietet sich hierfür vor allem die Verwendung eines hochfrequenten Wechselfeldes (HF-Erhitzung) an. Übliche HF-Erhitzer bestehen aus zwei parallel angeordneten Elektroden, an die ein elektrisches Wechselfeld mit einer Frequenz von beispielsweise 27,12 MHz und einer Spannung von 2 bis 10 kV angelegt wird. Diese Felder sind in der Lage, tief in elektrisch leitfähige feuchte Feststoffe und Suspensionen einzudringen und diese zu erwärmen. Im Idealfall einer vollkommen gleichmäßigen Ausprägung des elektromagnetischen Feldes können Stoffe gleichmäßig erwärmt werden.

Das Ziel der HF-Erhitzung ist eine schnelle und gleichmäßige und damit eine schonende Erwärmung von temperaturempfindlichen Stoffen, die einer konventionellen Erhitzung in Wärmetauschern nicht oder nur schlecht zugänglich sind.

Eine HF-Erhitzung wird vielfach gewählt, um Produkte über den gesamten Querschnitt gleichmäßig zu erwärmen z.B. mit dem Ziel der Pasteurisierung, Sterilisierung oder der Zubereitung. Es zeigt sich aber, dass in HF-Erhitzern, die in Luft ein homogenes elektromagnetisches Feld ausbilden, beim Betrieb mit den genannten Produkten teilweise extreme Feld- und Temperaturinhomogenitäten auftreten. Die Produkte werden sehr inhomogen erhitzt, was den Vorteil der durchdringenden Erhitzung aufhebt und zu erheblichen Produktschädigungen führen kann.

So zeigen sich z.B. bei verpackten Feststoffen besonders an den Rändern der Verpackungen, an der Außenseite und an besonders dünnen Stellen der Produkte ausgeprägte Übertemperaturen. Es kann an diesen Stellen zu Überhitzungen und zu Schädigungen der Produkte kommen. Die inneren Bereiche der Feststoffe werden dabei trotz der hohen, produktschädigenden Temperaturen der äußeren Bereiche vielfach nur unzureichend erwärmt.

Die gleichen Effekte sind auch beim Einsatz von HF-Erhitzerrohren zu beobachten, bei denen außen an einem nicht leitfähigen Rohr (z.B. aus Quarzglas) Elektroden angebracht werden. Durch das Rohr können zur Erhitzung hochviskose, pastöse Flüssigkeiten oder Suspensionen gefördert werden. Dabei zeigen sich vor allem an den Rohrwandungen ausgeprägte Schädigungen. Hier kommt es zu starken Überhitzungen. In der Rohrmitte werden trotz der hohen Temperaturen an der Rohrwandung nur unzureichende Temperaturen erreicht. Dadurch entstehen ähnliche Probleme mit Temperaturinhomogenitäten im Rohrquerschnitt und mit Belagbildung an der Rohrwandung wie bei konventionellen von außen beheizten Rohrwärmetauschern.

Ein weiterer Nachteil einer ungleichmäßigen Erhitzung ergibt sich durch die Veränderung der elektrischen Leitfähigkeit an den wärmeren Stellen. Die warmen Stellen weisen vielfach eine erhöhte elektrische Leitfähigkeit auf, wodurch sie vielfach im HF-Feld noch schneller erhitzt werden. Dieser Vorgang kann zum Auftreten so genannter "Hot Spots" führen, da die heißen Stellen überproportional erhitzt werden. Die Temperaturinhomogenitäten werden damit immer weiter verstärkt.

Trotz der Versuche zur Vergleichmäßigung des elektrischen Feldes und der Energiedichte zwischen den Elektroden durch Anpassung der Elektrodengeometrie gelingt es mit den bekannten Verfahren nach Stand der Technik nicht, Überhitzungen und Temperaturinhomogenitäten zu vermeiden. Die Temperaturen sind fast immer an den Außenseiten der Produkte deutlich erhöht, während an Stellen im Innern der Produkte häufig deutlich niedrigere Temperaturen vorhanden sind. Dies gilt im Besonderen für Feststoffe, die z.B. verpackt im HF-Feld erwärmt werden, und für hochviskose Flüssigkeiten und Suspensionen in HF-Erhitzerrohren.

Die Nachteile der HF-Erhitzer nach Stand der Technik lassen sich somit wie folgt zusammenfassen:
- ungleichmäßige Erhitzung über dem Produkt- oder Rohrquerschnitt;
- Ausbildung eines ungleichmäßigen HF-Feldes, da wärmere Stellen im Produkt immer schneller erhitzt werden;
- Temperaturschädigung an einigen Stellen der Produkte, vielfach an den Außenseiten.

Die Aufgabe der vorliegenden Erfindung besteht darin, ein Verfahren anzugeben, mit dem sich Produkte gleichmäßiger erhitzen lassen. Insbesondere sollen mit dem Verfahren eine Vergleichmäßigung der Temperaturverteilung in den Produkten erreicht und somit Temperaturinhomogenitäten reduziert oder vermieden werden.

### Darstellung der Erfindung

Die Aufgabe wird mit dem Verfahren gemäß Patentanspruch 1 gelöst. Vorteilhafte Ausgestaltungen des Verfahrens sind Gegenstand der Unteransprüche oder können den nachfolgenden Ausführungen entnommen werden.

Bei dem vorgeschlagenen Verfahren zur gleichmäßigen Erhitzung von Produkten werden die Produkte einem HF-Feld ausgesetzt. Unter einem HF-Feld ist hierbei ein elektromagnetisches Feld im Frequenzbereich zwischen etwa 10kHz und etwa 300MHz zu verstehen, in dem die Produkte durch dielektrische Erwärmung erhitzt werden. Vorzugsweise werden die Frequenzen 13,56 MHz, 27,12 MHz oder 40,68 MHz verwendet, die für industrielle Anwendungen freigegeben sind. Generell sind aber auch andere Frequenzen für eine HF-Erhitzung geeignet. Bei dem Verfahren werden erste Bereiche der Produkte, die durch das Wechselfeld stärker erwärmt werden als zweite Bereiche, zumindest vor oder während der Erhitzung in dem Wechselfeld durch zusätzliche Mittel zur Wärmeübertragung gekühlt und/oder die zweiten Bereiche durch zusätzliche Mittel zur Wärmeübertragung erwärmt. Das Verfahren zeichnet sich dadurch aus, dass die Produkte in einer geschlossenen Verpackung oder einem geschlossenen Gefäß vollständig in ein flüssiges Medium als das zusätzliche Mittel zur Wärmeübertragung eingebracht und von diesem umströmt werden.

Beim erfindungsgemäßen Verfahren wird der Erwärmung der Produkte im elektrischen Wechselfeld somit eine Temperaturvergleichmäßigung überlagert, die durch einen zusätzlichen gezielten Wärmetransport über Konvektion oder Wärmeleitung erreicht wird.

Die Temperaturvergleichmäßigung wird über eine zusätzliche Erwärmung der kälteren Stellen der Produkte und/oder eine zusätzliche Kühlung der heißen Stellen der Produkte erreicht. Dieser Vorgang erfolgt in einer besonders vorteilhaften Ausgestaltung der Erfindung direkt im HF-Feld.

Bei dem Verfahren wird ein Abführen der Überhitzungen von Produkt- oder Verpackungsaußenseiten durch Übertragung der Wärme in einen geeigneten Wärmeträger erreicht. Dieser Wärmeträger kann z.B. Thermoöl, Wasser oder dergleichen sein, der durch die Verpackung vom Produkt getrennt ist.

So können die verpackten Produkte von außen mit Wasser umströmt werden. Dies wird dadurch erreicht, dass sich die verpackten Produkte in einem Wasserbad befinden oder von einem Wasserstrom umströmt werden. Dabei sollte das Wasser eine niedrigere oder maximal gleich hohe Temperatur aufweisen als die angestrebte maximale Temperatur des Produktes. Damit ist ein Abführen von Wärme aus Zonen mit einer Übertemperatur sichergestellt. Die Kontaktstellen zwischen der Produktverpackung und Produkt werden dadurch gekühlt, die elektrische Leitfähigkeit der Produktstelle wird gesenkt und eine Temperaturvergleichmäßigung wird erreicht. So genannte Hot Spots und lokale Überhitzungen können an diesen Stellen vermieden werden. Neben Wasser können selbstverständlich auch andere als Wärmeträger geeignete Medien eingesetzt werden.

In einer weiteren Ausgestaltung des erfindungsgemäßen Verfahrens wird für den Transport der Wärme ein flüssiges oder gasförmiges Medium eingesetzt, das im HF-Feld nicht oder nur geringfügig erwärmt wird. Als in diesem Sinne inerte Flüssigkeit eignet sich im Besonderen destilliertes oder entionisiertes Wasser. Dieses wird in einem HF-Feld fast nicht erwärmt. Somit gelingt es, Wärme direkt im Bereich des HF-Feldes aus heißen Zonen des Produktes in ein Kühlmedium mit einer hohen Wärmekapazität sehr schnell abzuführen ohne das Kühlmedium durch das HF-Feld selbst zu erwärmen.

In einer besonders vorteilhaften Ausgestaltung dieser Anwendung wird ein verpacktes Produkt durch ein definiert temperiertes Wasserbad mit entionisiertem oder destilliertem Wasser geführt. So kann ein verpacktes Produkt, das z.B. auf 90 °C erwärmt werden soll, zunächst durch ein kühles Wasserbad geführt werden, das eine Temperatur von z.B. 40 °C aufweist. Durch diese Maßnahme wird erreicht, dass dünne Bereiche des Produktes und die Außenzonen auf Werte deutlich unter 90 °C gekühlt werden, während das Produkt im Wasserbad mit dem elektrischen Wechselfeld, insbesondere mit HF-Strahlung, beaufschlagt wird. Die inneren Bereiche werden dagegen nicht gekühlt, so dass insgesamt eine gleichmäßige Erwärmung bis zu einer Temperatur von 90 °C erreicht werden kann. Das Produkt kann dann bei Bedarf nach Verlassen des HF-Feldes in ein Wasserbad gefördert werden, das eine Temperatur von 90 °C aufweist. Hier werden dann die äußeren Bereiche auf die gewünschte Zieltemperatur erwärmt und dort gehalten. Durch diese Prozessführung kann trotz schneller Erhitzung vermieden werden, dass im Produkt höhere Temperaturen auftreten als 90 °C.

Eine weitere Möglichkeit zur Vermeidung von Übertemperaturen besteht bei der Erwärmung von Produkten mit einem Flüssiganteil in der Absenkung des Systemdrucks auf einem Wert, bei dem die Siedetemperatur des Flüssiganteils in etwa der Zieltemperatur entspricht, auf die das Produkt erhitzt werden soll. Wird in einem wässrigen System ein Druck von z.B. 200 hPa (200 mbar) angelegt, so wird die Siedetemperatur des Wassers auf 60 °C reduziert. Wenn es erforderlich ist, dass die Produkt-Temperatur Werte von z.B. 60 °C nicht übersteigt und es die Produktzusammensetzung zulässt, können dadurch gezielt kleine Volumina des Produktes in heißen Zonen des Produktes verdampft werden. Der Dampf kann dann, vergleichbar der Dampfkavitation bei der konventionellen Erhitzung an heißen Flächen, zu kälteren Produktstellen in der Verpackung strömen. Dort kondensiert der Dampf unmittelbar an den kalten Produktstellen und erwärmt diese dabei. Durch die schnelle Kondensation wird ein Platzen der Verpackung vermieden. Auch durch diese Maßnahme wird einer Strahlungserhitzung eine Wärmeübertragung durch Wärmeleitung und Konvektion überlagert und eine Temperaturvergleichmäßigung erreicht.

### Ausführungsbeispiel: Erhitzer für verpackte Lebensmittel

In der ersten Ausführung besteht der Erhitzer aus zwei parallelen Plattenelektroden von 40 cm x 40 cm im Abstand von 40 cm voneinander. Durch Anlegen einer Spannung von 10 kV und einer Frequenz von 27,12 MHz an die Elektroden entsteht im Luftraum zwischen den Elektroden ein Hochfrequenzfeld. Ein 1000 ml Konservenglas wurde mit Früchten in Zuckeraufguss gefüllt und mit einem Schraubdeckel verschlossen. Das Konservenglas wurde in das Hochfrequenzfeld eingebracht und von 20 °C auf 90 °C erwärmt.

Die Aufheizrate der Früchtemischung war gering. Ferner kam es am Boden des Glases und an der Schulter zum Schraubrand zu erhöhten Temperaturen über 100 °C.

In einer zweiten Ausführung ist der Raum zwischen den Elektroden mit einem quaderförmigen Wasserbecken ausgefüllt, dessen Wände und Boden aus elektrisch isolierenden Materialen, z.B. Borsilikatglas ausgeführt sind. Das Wasserbecken wurde mit 70 °C warmem, entionisiertem Wasser gefüllt. Die Elektrodenspannung betrug 10 kV mit einer Frequenz von 27,12 MHz. Ein Konservenglas in der gleichen Ausführung und mit der gleichen Füllung wie in der ersten Ausführung beschrieben wurde in das Wasserbad eingebracht und von 20 °C auf 90 °C in 120 Sekunden erwärmt. Die Aufheizrate war etwa um den Faktor 100 höher als in der ersten Ausführung des Erhitzers. Die Temperaturerhöhungen am Boden und an der Schulter des Glases konnten durch die kühlende Wirkung des Wasserbades deutlich geringer gehalten werden als in der ersten Erhitzerausführung.

Das Verfahren in der zweiten Ausführung eignet sich gleichermaßen für Produkte in Kunststofffolienbeuteln, in Kunststoffbechern und in Kunststoffeimern.

## Patentansprüche

1. Verfahren zur gleichmäßigen Erhitzung von Produkten, bei dem die Produkte in einem HF-Feld erhitzt werden, durch das sich erste Bereiche der Produkte stärker erwärmen als zweite Bereiche,
wobei die ersten Bereiche zumindest während der Erhitzung in dem HF-Feld durch zusätzliche Mittel zur Wärmeübertragung gekühlt und/oder die zweiten Bereiche durch zusätzliche Mittel zur Wärmeübertragung erwärmt werden,
wobei die Produkte in einer geschlossenen Verpackung oder einem geschlossenen Gefäß vollständig in ein flüssiges Medium als das zusätzliche Mittel zur Wärmeübertragung eingebracht und von diesem umströmt werden.

2. Verfahren nach Anspruch 1,
**dadurch gekennzeichnet,**
**dass** das flüssige Medium ein Wasserbad ist.

3. Verfahren nach Anspruch 1 oder 2,
**dadurch gekennzeichnet,**
**dass** das flüssige Medium durch das HF-Feld nicht oder zumindest schwächer als die Produkte erwärmt wird.

4. Verfahren nach Anspruch 1 oder 2,
**dadurch gekennzeichnet,**
**dass** das flüssige Medium durch das HF-Feld stärker als die Produkte erwärmt wird.

5. Verfahren nach einem der Ansprüche 1 bis 4,
**dadurch gekennzeichnet,**
**dass** das flüssige Medium temperiert wird.

6. Verfahren nach einem der Ansprüche 1 bis 5,
**dadurch gekennzeichnet,**
**dass** bei der Erhitzung von Produkten mit einem Flüssiganteil auf eine Zieltemperatur, insbesondere von wässrigen Produkten, ein Druck eingestellt wird, bei dem die Siedetemperatur des Flüssiganteils in etwa der Zieltemperatur entspricht.

7. Verfahren nach einem der Ansprüche 1 bis 6,
**dadurch gekennzeichnet,**
**dass** die Produkte nach der Erhitzung in dem HF-Feld in ein Wasserbad gefördert werden, das eine Zieltemperatur für die Produkte aufweist.
